# EUROPEAN PATENT SPECIFICATION

(11) **EP 4 054 925 B1**
(45) Date of publication and mention of the grant of the patent: **22.11.2023**
(21) Application number: 20800078.6
(22) Date of filing: 28.10.2020
(51) Int. Cl.: B62J 23/00, B62J 11/10, B62K 25/08

(54) **A FRONT FORK GUARD**
GABELPROTEKTOR
PROTECTEUR DE FOURCHE

(30) Priority: 04.11.2019 SE 1951256
(43) Date of publication of application: 14.09.2022
(73) Proprietor: Nyman, Kjell, 724 61 Västerås (SE)
(72) Inventor: Nyman, Kjell, 724 61 Västerås (SE)
(74) Representative: Swea IP Law AB
(86) International application number: PCT/EP2020/080313
(87) International publication number: WO 2021/089385

(56) References cited:
- GB-A- 2 237 854
- JP-A- H0 220 486
- JP-A- H03 189 281
- JP-A- 2012 176 644

## Description

### Technical field

The present disclosure relates to a front fork guard for protecting a front fork dampener.

### Background

Motorcycles have a wide range of uses and are often used for off-road riding. There are many sports associated with off-road riding, such as Motocross, Enduro or mountain bike, MTB. When riding off-road, the motorcycle or mountain bike becomes dirty and is exposed to stone chipping, dirt and/or debris. Therefore, sensitive parts of the motorcycle or mountain bike are protected by different kinds of cover.

One part of the motorcycle or mountain bike that is particularly exposed is the front fork. Front fork seals of the front fork dampeners are easily damaged by gravel or mud. Stone chips in the fork tubes and dirt in the fork seals may cause oil leakage from the dampener. This results in oil or air loss in the fork and decreases performance. The worst-case scenario is that the oil contaminates the brake disc with the result of loss of brake power.

Front fork guards are used to cover the fork tubes and the fork seal. The front fork guards are attached to the front fork feet and protect the fork tubes from stone chipping and the fork tubes and the fork seal from much of the dirt.

However, dirt anyway finds its way behind the front fork guard and to the fork tubes and into the fork seals. When the fork tubes are dirty and the motorcycle or mountain bike is used, there is a risk of dirt affecting the function of the fork seal. Also, gravel in the dirt may scratch the fork tube which may result in dents where oil leakage may occur.

Therefore, there is a need to regularly clean the front fork behind the front fork guard. Today, this is done by either dismantling the front fork guard from the front fork foot to clean behind it or to try to clean without removing the front fork guard. Trying to clean without removing the front fork guard most often leads to poor cleaning due to the limited access to the front tube and seal and removing the front fork guard is so cumbersome and time consuming that many rather skip the cleaning which results in a shorter lifetime of the front fork dampener. To not clean the front tube and seal may also lead to personal injuries due to the brakes malfunctioning in the case of oil leakage that contaminates the brake disc.

There is a need for a solution of the above problem that it is hard and time consuming to clean under the front fork guard.

A front fork guard with the features of the preamble is shown in the document JP H02 20486 A.

### Summary

It is an aim of the present disclosure to at least partly overcome the above problems, and to provide an improved device for protecting a front fork dampener of a motorcycle or mountain bike where it is easy and fast to access the front fork dampener for cleaning and inspection.

This aim is achieved by a device as defined in claim 1.

The disclosure provides, a front fork guard for protecting a front fork dampener. The front fork guard comprises an elongated shield part and a fastening arrangement for fastening the front fork guard to a motorcycle or mountain bike. The front fork guard further comprises a connection element. The elongated shield part and the fastening arrangement are connected to each other with the connection element such that the elongated shield part and the fastening arrangement are pivotable relative each other between a closed position in which they abut and an open position. The front fork guard further comprises a locking mechanism arranged to hold the elongated shield part and the fastening arrangement in the closed position when engaged. This front fork guard can thus be opened when it is mounted on the motorcycle or mountain bike. Accordingly, there is no need to dismount the front fork guard from the front fork foot to clean under it. When a user wishes to clean under the front fork guard, he/she pivots the front fork guard from the closed position to the open position. When the front fork guard is mounted on the motorcycle or mountain bike, the open position will allow access to under the front fork guard for cleaning, maintenance and inspection. Another advantage is that, when there is no need to remove the front fork guard for cleaning, the threads on the fork foot, where the front fork guard is mounted, will have a longer lifetime due to reduced stress from mounting and dismounting the front fork guard. The locking mechanism ensures that the front fork guard does not move to the open position when the motorcycle or mountain bike is used.

According to some aspects, the connection element comprises at least one hinge. A hinge can be realized in many different forms and can be made durable. It is therefore a good option for the pivotable connection element. A hinge can also be arranged to be pivotable to different angles.

According to some aspects, the fastening arrangement comprises a fastening arrangement ridge arranged to overlap with the elongated shield part in the closed position. This is to minimize the amount of dirt passing between the elongated shield part and the fastening arrangement.

According to some aspects, the elongated shield part comprises an elongated shield part ridge arranged to overlap with the fastening arrangement in the closed position. This is to minimize the amount of dirt passing between the elongated shield part and the fastening arrangement.

According to some aspects, the locking mechanism comprises any one of a cotter, a clamp, a pin, a ridge, a latch and a screw. The locking mechanism is to ensure that the elongated shield part and the fastening arrangement do not pivot from the closed position to the open position and any of the above mechanisms may be used for the purpose. The locking mechanism is, according to some aspects, a quick release locking mechanism. A quick release may be, for example, a D-ring head on a screw or a pin.

According to some aspects, the fastening arrangement comprises at least two holes for mounting the front fork guard to the motorcycle or mountain bike. The front fork guard is most commonly mounted to pre-made attachments locations in the front fork foot. Different suppliers may have different specifications for measurements locations of the attachment locations. The fastening arrangement may thus look different for different manufacturers.

According to some aspects, the front fork guard comprises a brake hose fastening arrangement arranged on the elongated shield part, wherein the brake hose fastening arrangement comprises a quick release fastener. A quick release fastener for the brake hose provides a fast and simple way of releasing the brake hose from the front fork guard.

According to some aspects, the elongated shield part has a length such that it covers a fork tube and the intersection between the fork tube and a fork cover of the front fork dampener when it is mounted on a motorcycle or mountain bike. The front fork guard thus covers the parts of the front fork dampener where dirt and pebbles most likely introduce a problem with the front fork dampener.

According to some aspects, the elongated shield part and the fastening arrangement form an elongated unit in the closed position which defines a longitudinal axis, wherein the elongated shield part is pivotable relative the fastening arrangement such that it pivots at an angle between 0° and 180° and preferably between 0° and 90° relative the longitudinal axis. Any angle that the elongated shield part can be pivoted to allow better access to the fork tube and seal is an improvement but a bigger angle off course allows for better access than a smaller angle.

### Brief description of the drawings

The invention will now be explained more closely by the description of different embodiments of the disclosure and with reference to the appended figures.
Fig. 1a shows an example of a front fork guard as seen from the front.
Fig. 1b shows the same example front fork guard as figure 1a but a zoomed-in view.
Fig. 2a shows the same example front fork guard as figure 1a and 1b but from a side view.
Fig. 2b shows the same example front fork guard as figure 2a but a zoomed-in view.
Fig. 3a shows the same example front fork guard as figure 1a and 1b but from the opposite side view.
Fig. 3b shows the same example front fork guard as figure 3a but a zoomed-in view.
Fig. 4a shows the same example front fork guard as figure 1a and 1b but from a back view.
Fig. 4b shows the same example front fork guard as figure 4a but a zoomed-in view.
Fig. 5a shows an example front fork guard where an elongated shield part has been rotated forwards on a pivotable connection element as compared to a fastening arrangement.
Fig. 5b shows the same example front fork guard as figure 5a but a zoomed-in view.
Fig. 6a shows the same example front fork guard as figure 5a and 5b but from a side view.
Fig. 6b shows the same example front fork guard as figure 6a but a zoomed-in view.
Fig. 7a shows an example front fork guard which is mirrored to the front fork guard illustrated in figures 1-6. The example front fork guard does not have a brake hose fastening arrangement as the previous example.
Fig. 7b shows the same example front fork guard as figure 7a but from a back view.
Fig. 7c shows the same example front fork guard as figures 7a-b but from a side view.
Fig. 7d shows the same example front fork guard as figures 7a-c but from a side view opposite to the view in figure 7c.
Fig. 8a shows an example front fork guard as figure 1a with a quick release fastener for the brake hose.
Fig. 8b shows an example quick release fastener.
Figs. 8c and 8d show the example quick release fastener on the example front fork guard of figure 8a but in a zoomed-in view and from different angles.
Fig. 9a shows an example front fork guard with a screw with a D-ring head for locking the elongated shield part and the fastening arrangement in place relative each other.
Fig. 9b shows an example of a screw with a D-ring head.
Fig. 9c shows the example front fork guard of figure 9a but in a zoomed-in view of the locking mechanism.
Fig. 9d shows the same as figure 9c but from behind.
Fig. 9e shows an example locking mechanism where it is locked by a pin.

### Detailed description

Aspects of the present disclosure will be described more fully hereinafter with reference to the accompanying drawings. The device disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

Unless otherwise defined, all terms, including technical and scientific terms, used herein have the same meaning as commonly understood by one of ordinary skill in the art to which this disclosure belongs.

The term "front fork guard" has several synonyms. In all uses of this text, front fork guard has the same meaning as front fork cover, front fork protection and front fork shield. A front fork guard is a cover of the lower part of the front fork dampener for protecting it from, for example, stone chipping and/or dirt.

The terms "fork tube" and "fork cover" are interchangeable with "front fork inner tube" and "front fork outer tube" respectively.

The disclosure provides a front fork guard where the top part, the elongated shield part, can be folded forwards when the front fork guard is mounted on a motorcycle or mountain bike.

In other words, when the front fork guard is mounted on the motorcycle or mountain bike, which is usually at a front fork foot of the front fork, it can, without dismounting it, be folded forwards to allow access to the fork tube and fork seal for cleaning and maintenance.

The figures show different aspects of front fork guards. The illustrated front fork guards are shown from different angles and also show different variations of front fork guards for the left and right front fork. The difference between the left and right front fork guard is that they are mirrored and that the left front fork guard comprises a brake hose fastening arrangement. It should be noted that not all front fork guards are mirrored for the left and right side. The brake hose fastening arrangement is to fasten the brake hose for the brakes. The brake hose is most commonly arranged on the left side as seen from a rider of the motorcycle or mountain bikes point of view. However, there may be manufacturers that choose to have the brake hose on the right side. The brake hose fastening arrangement is then arranged on the right front fork guard.

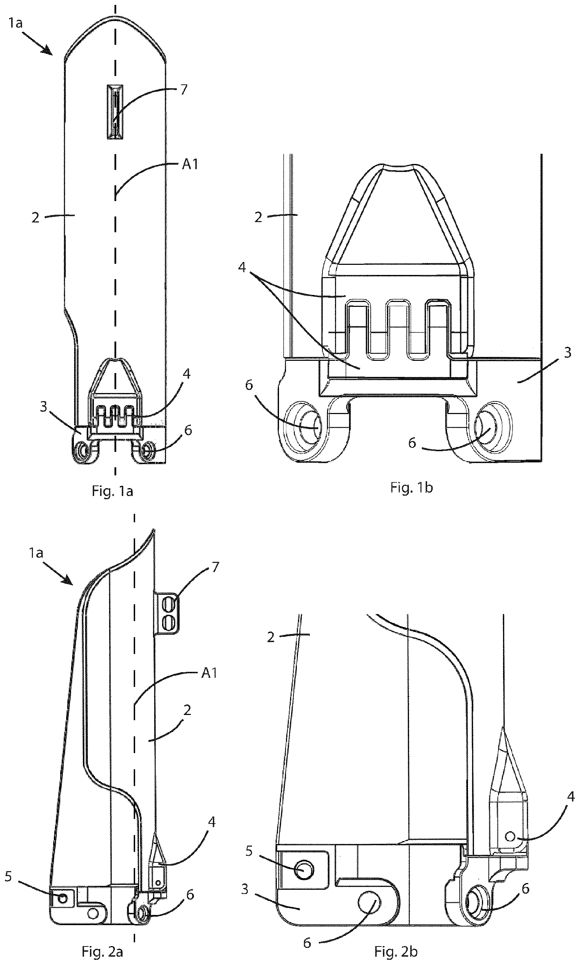

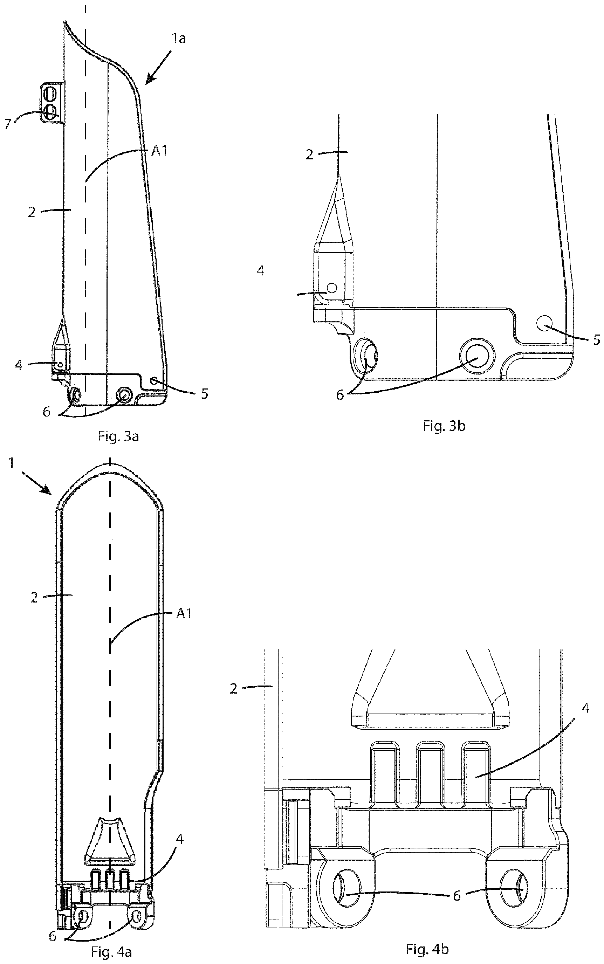

Figure 1a shows an example of a front fork guard 1a as seen from the front. Figure 1b shows the same example front fork guard 1a as figure 1a but a zoomed-in view. Figure 2a shows the same example front fork guard 1a as figure 1a and 1b but from a side view. Figure 2b shows the same example front fork guard 1a as figure 2a but a zoomed-in view. Figure 3a shows the same example front fork guard 1a as figure 2a and 2b but from the opposite side view. Figure 3b shows the same example front fork guard 1a as figure 3a but a zoomed-in view. Figure 4a shows the same example front fork guard 1a as figure 1a and 1b but from a back view. Figure 4b shows the same example front fork guard 1a as figure 4a but a zoomed-in view.

The front fork guard 1 illustrated in all figures is for protecting a front fork dampener of a motorcycle or mountain bike. The front fork guard 1 comprises an elongated shield part 2 and a fastening arrangement 3 for fastening the front fork guard 1 to a motorcycle or mountain bike. As can be seen in the figures, the elongated shield part 2 has a rounded shape to partly surround the front fork dampener. The rounding is, however, a design choice; the shape may be different, for example having an angled shape. The elongated shield part may also have the shape of an elongated plate.

The front fork guard 1 comprises a connection element 4 and the elongated shield part 2 and the fastening arrangement 3 are connected to each other with the connection element 4 such that the elongated shield part 2 and the fastening arrangement 3 are pivotable relative each other between a closed position in which they abut and an open position. In other words, the connection element 4 provides a connection between the fastening arrangement 3 and the elongated shield part 2. The connection provides a pivotability between the fastening arrangement 3 and the elongated shield part 2. The connection element 4 may be any kind of connection allowing the elongated shield part 2 and the fastening arrangement 3 to be pivotable relative each other. As can be seen in the figures, the connection element 4 comprises, for example, at least one hinge. A hinge can be realized in many different forms and can be made durable. It is therefore a good option for the pivotable connection element.

A hinge can also be arranged to be pivotable to different angles. As can be seen in the drawings, the connection element 4 may be a hinge that is integrated in the fastening arrangement 3 and the elongated shield part 2 and with a pin holding them together. In the example of the drawings the connection element 4 comprises four teeth in the elongated shield part 2 and three teeth in the fastening arrangement 3 which together with a pin form the connection element 4. The number of teeth may also be, for example, two teeth in the elongated shield part 2 and one in the fastening arrangement 3 or vice versa. In other words, the number of teeth is up to the designer of the front fork guard 1. An alternative to using a hinge for the connection element 4 is, for example, to use a flexible strap fastened in both the elongated shield part 2 and the fastening arrangement 3. The elongated shield part 2 and the fastening arrangement 3 are then pivotable due to the flexibility of the strap.

As can be seen in the figures the fastening arrangement 3 is arranged at one end of the elongated shield part 2. The elongated shield part 2 is rotatable/pivotable relative the fastening arrangement 3 between a guard position, i.e. the closed position, where it covers part of the front fork dampener and an open position where it is arranged such that it does not cover the part of the front fork dampener that needs to be cleaned regularly, i.e. the fork tube and seal.

The front fork guard comprises a locking mechanism arranged to hold the elongated shield part and the fastening arrangement in the closed position when engaged. The locking mechanism ensures that the front fork guard does not move to the open position when the motorcycle or mountain bike is used. When riding a motorcycle or mountain bike off road, there will be a lot of forces acting on it and without the locking mechanism, the elongated shield part 2 would not stay in place.

With this solution, the front fork guard can be opened when it is mounted on the motorcycle or mountain bike. Accordingly, there is no need to dismount the front fork guard to clean under it. When a user wishes to clean under the front fork guard, he/she moves the front fork guard from the closed position to the open position. When the front fork guard is mounted on the motorcycle or mountain bike, the open position will allow access to under the front fork guard to clean the front fork dampener. Another advantage is that, when there is no need to remove the front fork guard for cleaning, the threads on the fork foot, where the front fork guard is mounted, will have a longer lifetime due to reduced stress from mounting and dismounting of the front fork guard.

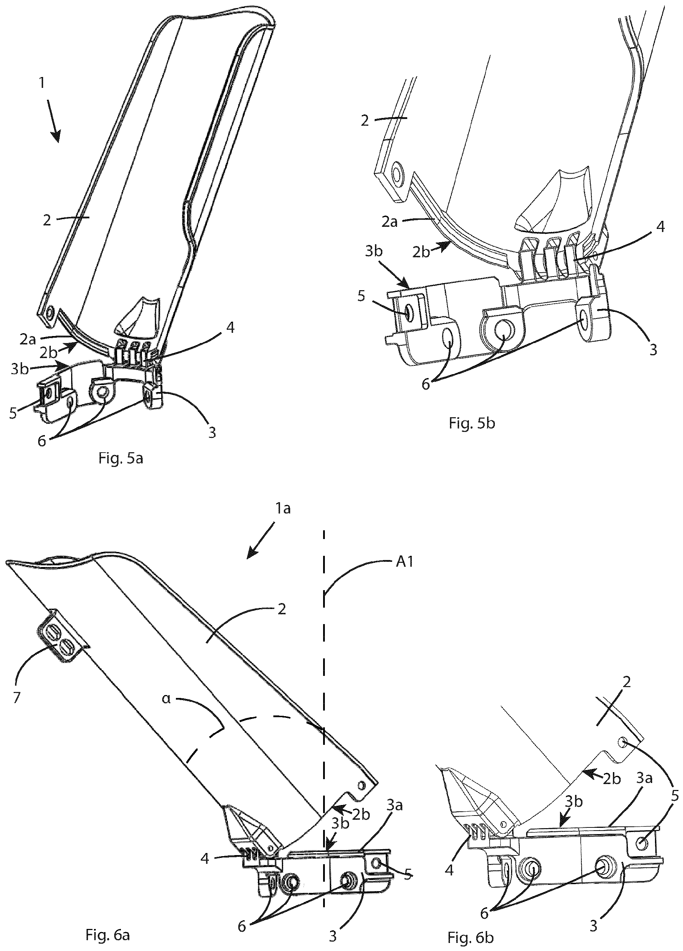

An opened front fork guard 1a can be seen in figures 5a-b and 6a-b. Figure 5a shows an example front fork guard 1a where an elongated shield part has been rotated forwards on a pivotable connection element as compared to a fastening arrangement. Figure 5b shows the same example front fork guard 1a as figure 5a but a zoomed-in view. Figure 6a shows the same example front fork guard 1a as figure 5a and 5b but from a side view. Figure 6b shows the same example front fork guard 1a as figure 6a but a zoomed-in view.

Also visible in figures 5a-b and 6a-b is that the fastening arrangement 3 and/or the elongated shield part 2 may comprise a ridge which forms a dirt seal in the intersection of the fastening arrangement 3 and the elongated shield part 2.

In figures 5a and 5b, the elongated shield part 2 comprises an elongated shield part ridge 2a arranged to overlap with the fastening arrangement 3 in the closed position. In figures 6a and 6b, the fastening arrangement 3 comprises a fastening arrangement ridge 3a arranged to overlap with the elongated shield part 2 in the closed position. Again, this is to minimize the amount of dirt passing between the elongated shield part 2 and the fastening arrangement 3. In the illustrated examples of figures 5a-b and 6a-b, the elongated shield part ridge 2a is arranged on a front part of the edge 2b of the bottom side of the elongated shield part 2. The bottom side being the side of the elongated shield part 2 arranged closest to the fastening arrangement 3. The fastening arrangement ridge 3a is illustrated to be arranged on a back part of the edge 3b of the top side of the fastening arrangement 3. The top side being the side of the fastening arrangement arranged closest to the elongated shield part 2. An alternative is that the fastening arrangement ridge 3a may be arranged on the front part of the edge 3b and the elongated shield part ridge 2a is arranged on the back part of the edge 2b.

The ridges 2a, 3a of the illustrated examples of figures 5a-b and 6a-b may be arranged to overlap. The overlap helps improve the front fork guard 1a in that it prevents dirt from passing between the elongated shield part 2 and the fastening arrangement 3.

In the figures illustrating the whole front fork guard 1a, a longitudinal axis A1 is illustrated. The elongated shield part 2 and the fastening arrangement 3 form an elongated unit in the closed position which defines a longitudinal axis A1. The elongated shield part 2 is, for example, pivotable relative the fastening arrangement 3 such that it pivots at an angle α between 0° and 180° and preferably between 0° and 90° relative the longitudinal axis A1. Any angle that the elongated shield part can be pivoted to allow better access to the fork tube and seal is an improvement but a bigger angle of course allows for better access than a smaller angle. For example, it is preferred that the elongated shield part 2 is pivotable relative the fastening arrangement 3 such that it is capable of pivoting to an angle α of at least 10° from the closed position. Another example is that the elongated shield part 2 is pivotable relative the fastening arrangement 3 such that it is capable of pivoting to an angle α of at least 45° or 90° from the closed position. In figures 5 and 6, where the elongated shield part 2 is inclined forwards relative the fastening arrangement 3, the angle α is about 45° from the closed position.

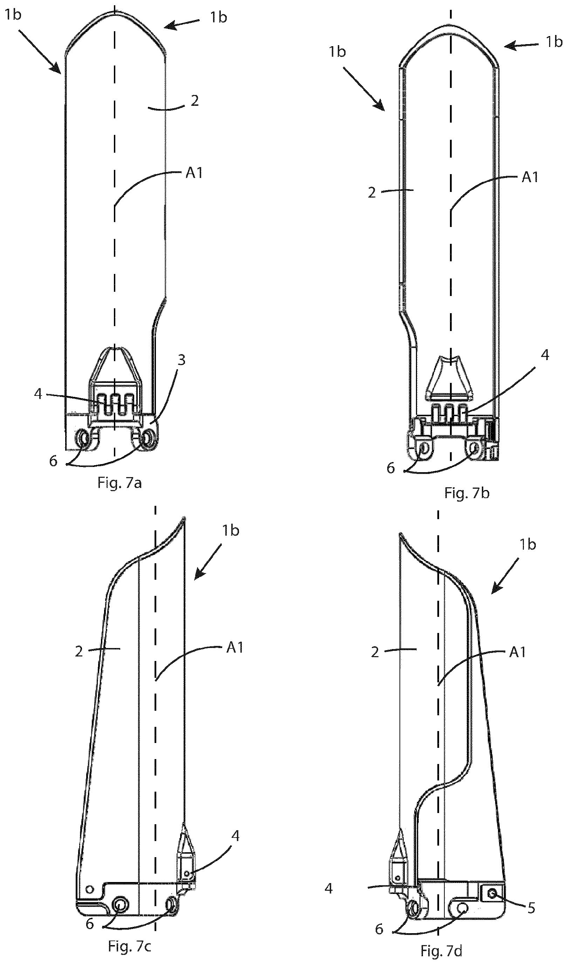

Figures 7a-d show a front fork guard 1b without a brake hose fastening arrangement 7. Again, the front fork guard without the brake hose fastening arrangement 7 is in general arranged on the right side of the front fork of a motorcycle or mountain bike. Figure 7a shows an example front fork guard 1b from a front side which is mirrored to the front fork guard illustrated in figures 1-6. The example front fork guard 1b does not have brake hose fastening arrangement 7 as the previous examples. Figure 7b shows the same example front fork guard as figure 7a but from a back view. Figure 7c shows the same example front fork guard as figure 7a-b but from a side view. Figure 7d shows the same example front fork guard as figure 7a-c but from a side view opposite to the view in figure 7c.

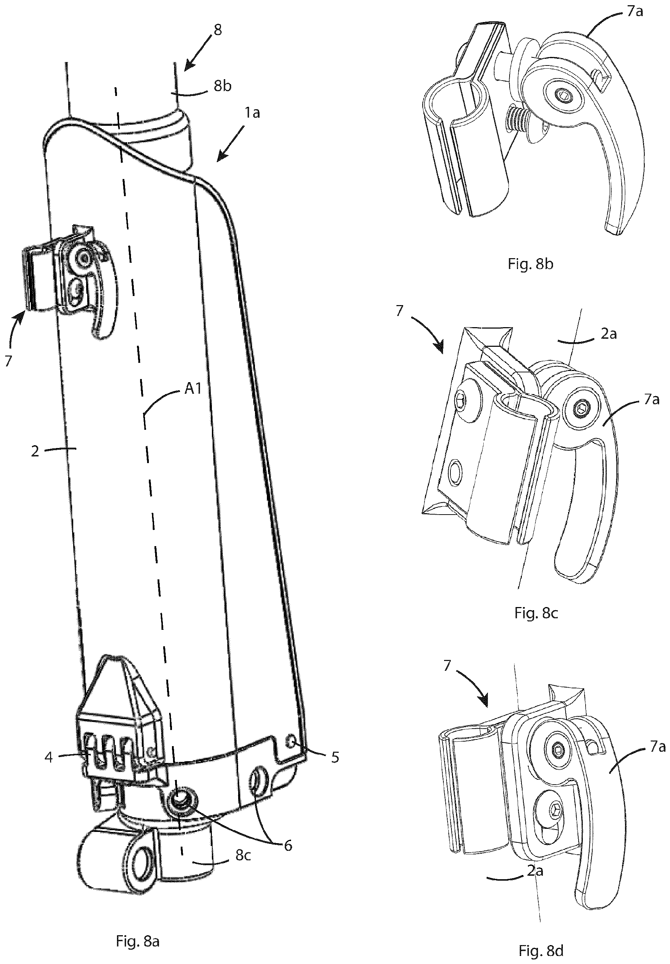

In figures 8a-d it is illustrated an example of a front fork guard 1a with a brake hose fastening arrangement 7. Thus, the front fork guard 1a may comprise an brake hose fastening arrangement 7 arranged on the elongated shield part 2. The brake hose fastening arrangement comprises a quick release fastener 7a. A quick release fastener 7a for the brake hose provides a fast and simple way of releasing the brake hose from the front fork guard 1a. A quick release fastener is for example a C-clamp, a screw with a D-ring, a pin, or the like. In the illustrated example, the quick release fastener 7a is a C-clamp. In figures 1a, 2a, 3a and 6a a brake hose fastening arrangement 7 is visible without the quick release fastener 7a. In these figures, the brake hose fastening arrangement 7 comprises two holes on a protruding part of the elongated shield part 2. The protrusion and the holes are also used in prior art front fork shield guards and are thus known to the skilled person.

Figure 8a shows an example left front fork guard 1a with a quick release fastener mounted for the brake hose. Figure 8b shows an example of an unmounted quick release fastener 7a. Figures 8c and 8d show the example of figure 8a but in a zoomed-in view and from different angles. The circular and elongated opening that is tightened with the quick release fastener 7a is where the brake hose is to be inserted. When the quick release fastener 7a is actuated, the brake hose is held in place in the circular and elongated opening.

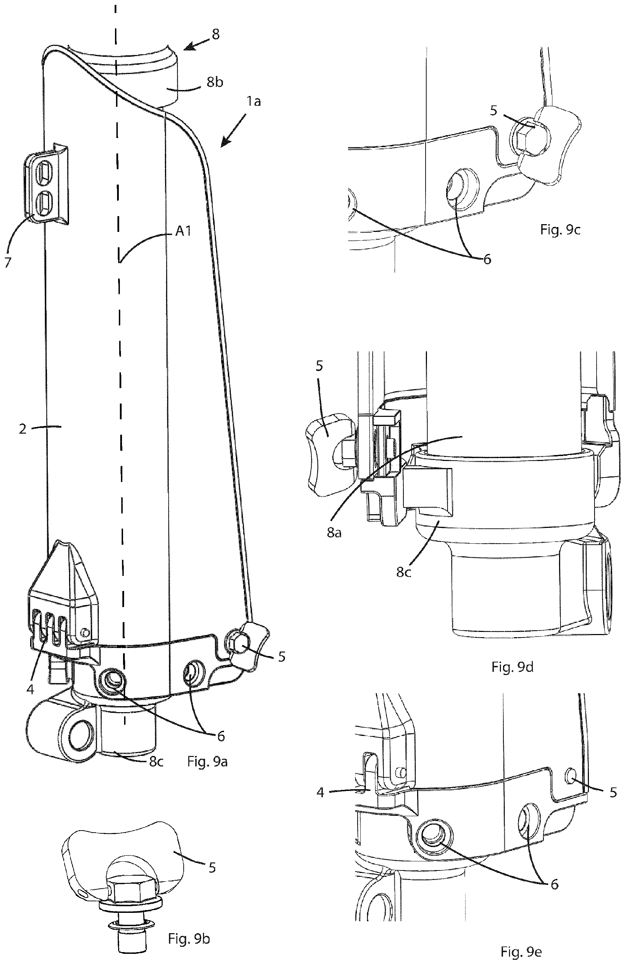

The locking mechanism 5 may be realized in many different forms. The locking mechanism 5 comprises, for example, any one of a cotter, a clamp, a pin, a ridge, a latch and a screw. Figure 9a shows an example front fork guard 1a with a screw with a D-ring head as a locking mechanism 5 for locking the elongated shield part 2 and the fastening arrangement 3 in place relative each other. Figure 9b shows an example of a screw with a D-ring head. Figure 9c shows the example front fork guard 1a of figure 9a but in a zoomed-in view of the locking mechanism 5. Figure 9d shows the same as figure 9c but from behind. Figure 9e shows an example locking mechanism where it is locked by a pin. The locking mechanism may also be a cotter used in the hole. Another alternative is that the locking mechanism comprises corresponding ridges on the elongated shield part 2 and the fastening arrangement 3 which, when overlapping, locks the part together. The locking mechanism may also be a latch, for example a spring latch.

In the figures, it can be seen in figures 2a-b, 3a-b, 5a-b, 6a-b, 7c-d, 8a and 9a and 9e that the elongated shield part 2 has a protrusion with a hole that overlaps with a hole in the fastening arrangement 3 in the closed position. The locking mechanism 5 is then the overlapping holes together with, for example, a cotter, a pin or a screw that can be used to hold the parts together. An alternative locking mechanism 5 is that a clamp can be used to hold the elongated shield part 2 and the fastening arrangement 3 in the closed position. If a clamp is used, the elongated shield part 2 and the fastening arrangement 3 does not necessarily overlap at the locking mechanism; protrusions in both parts that the clamp can engage with may be used.

Another alternative locking mechanism 5 is to use a buckle or a clasp with one part arranged on the elongated shield part 2 and one part on the fastening arrangement 3.

The locking mechanism 5 is to ensure that the elongated shield part 2 and the fastening arrangement 3 do not pivot from the closed position to the open position and any of the above mechanisms may be used for the purpose. The locking mechanism comprises, for example, a quick release locking mechanism. A quick release may be, for example, a D-ring head on a screw, a pin, a buckle or clasp.

In figures 8a and 9a, 9d and 9e, the front fork dampener 8 is visible under the front fork guard 1. In the top part of figures 8a and 9a, the fork cover 8b is visible and in the bottom part, the front fork foot 8c is visible. In figure 9d, the fork tube 8a and the front fork foot 8c are visible in a view from behind.

A front fork guard 1a is most commonly mounted to pre-made attachments locations in the front fork foot 8c of the front fork dampener 8. Different suppliers may have different specifications for measurements locations of the attachment locations. The fastening arrangement 3 may thus look different for different manufacturers. The fastening arrangement may comprise at least two holes 6 for mounting the front fork guard 1a to the motorcycle or mountain bike. The holes may be used for screwing or bolting the front fork guard to the front fork foot.

The size, i.e. the length and width of the front fork guard 1a may vary depending on what front fork dampener it is to protect. The elongated shield part 2 has, for example, a length such that it covers the fork tube 8a and the intersection between the fork tube and the fork cover 8b of the front fork dampener when it is mounted on a motorcycle or mountain bike. The front fork guard thus covers the parts of the front fork dampener 8 where dirt and pebbles most likely introduce a problem with the front fork dampener 8. The length of the total front fork dampener 8 is, for example, between 10 cm and 50 cm. The width of the front fork guard 1a is, for example, between 7 cm and 15 cm. The size of the front fork guard 1a is up to the implementer of it and aspects such as how much it is to protect of the front fork guard and aesthetics can be taken into consideration.

The front fork guard 2 of the present disclosure is not limited to the embodiments disclosed but may be varied and modified within the scope of the following claims.

References:
1. Front fork guard
   a. Left front fork guard
   b. Right front fork guard
2. Elongated shield part
   a. Ridge
   b. Edge
3. Fastening arrangement
   a. Ridge
   b. Edge
4. Connection element
5. Locking mechanism
6. Holes
7. Brake hose fastening arrangement
   a. Quick release fastener
8. Front fork dampener
   a. Fork tube
   b. Fork cover
   c. Fork foot

## Claims

1. A front fork guard (1) for protecting a front fork dampener (8), the front fork guard (1) comprises:
- an elongated shield part (2),
- a fastening arrangement (3) for fastening the front fork guard (1) to a motorcycle or mountain bike,
- a connection element (4), wherein the elongated shield part (2) and the fastening arrangement (3) are connected to each other with the connection element (4),
**characterised in that** the elongated shield part (2) and the fastening arrangement (3) are pivotable relative each other between a closed position in which they abut and an open position, and
- a locking mechanism (5) arranged to hold the elongated shield part (2) and the fastening arrangement (3) in the closed position when engaged.

2. The front fork guard (1) according to claim 1, wherein the connection element (4) comprises at least one hinge.

3. The front fork guard (1) according to claim 1 or 2, wherein the fastening arrangement (3) comprises a fastening arrangement ridge (3a) arranged to overlap with the elongated shield part (2) in the closed position.

4. The front fork guard (1) according to any one of the preceding claims, wherein the elongated shield part (2) comprises an elongated shield part ridge (2a) arranged to overlap with the fastening arrangement (3) in the closed position.

5. The front fork guard (1) according to any one of the preceding claims, wherein the locking mechanism (5) comprises any one of a cotter, a clamp, a pin, a ridge, a latch and a screw.

6. The front fork guard (1) according to any one of the preceding claims, wherein the fastening arrangement (3) comprises at least two holes (6) for mounting the front fork guard (1) to the motorcycle or mountain bike.

7. The front fork guard (1) according to any one of the preceding claims, comprising a brake hose fastening arrangement (7) arranged on the elongated shield part (2), wherein the brake hose fastening arrangement (7) comprises a quick release fastener (7a).

8. The front fork guard (1) according to any one of the preceding claims, wherein the elongated shield part (2) has a length such that it covers a fork tube (8a) and the intersection between the fork tube and a fork cover (8b) of the front fork dampener (8) when it is mounted on a motorcycle or mountain bike.

9. The front fork guard (1) according to any one of the preceding claims, wherein the elongated shield part (2) and the fastening arrangement (3) forms an elongated unit in the closed position which defines a longitudinal axis (A1), wherein the elongated shield part (2) is pivotable relative the fastening arrangement (3) such that it pivots at an angle (α) between 0° and 180° and preferably between 0° and 90° relative the longitudinal axis.

## Patentansprüche

1. Vorderradgabelschutz (1) zum Sichern eines Vorderradgabeldämpfers (8), der Vorderradgabelschutz (1) umfassend:
- ein längliches Abschirmungsteil (2),
- eine Befestigungsanordnung (3) zum Befestigen des Vorderradgabelschutzes (1) an einem Motorrad oder Geländerad,
- ein Verbindungselement (4), wobei das längliche Abschirmungsteil (2) und die Befestigungsanordnung (3) mit dem Verbindungselement (4) miteinander verbinden sind,
**dadurch gekennzeichnet, dass** das längliche Abschirmungsteil (2) und die Befestigungsanordnung (3) zwischen einer geschlossenen Position, in der sie anliegen, und einer offenen Position relativ zueinander schwenkbar sind, und
- einen Sperrmechanismus (5), der angeordnet ist, um das längliche Abschirmungsteil (2) und die Befestigungsanordnung (3) in der geschlossenen Position zu halten, wenn in Eingriff stehend.

2. Vorderradgabelschutz (1) nach Anspruch 1, wobei das Verbindungselement (4) mindestens ein Scharnier umfasst.

3. Vorderradgabelschutz (1) nach Anspruch 1 oder 2, wobei die Befestigungsanordnung (3) einen Befestigungsanordnungssteg (3a) umfasst, der angeordnet ist, um mit dem länglichen Abschirmungsteil (2) in der geschlossenen Position zu überlappen.

4. Vorderradgabelschutz (1) nach einem der vorstehenden Ansprüche, wobei das längliche Abschirmungsteil (2) einen länglichen Abschirmungsteilsteg (2a) umfasst, der angeordnet ist, um mit der Befestigungsanordnung (3) in der geschlossenen Position zu überlappen.

5. Vorderradgabelschutz (1) nach einem der vorstehenden Ansprüche, wobei der Sperrmechanismus (5) ein beliebiges von einem Querkeil, einer Klemme, einen Stift, einem Steg, einer Verriegelung und einer Schraube umfasst.

6. Vorderradgabelschutz (1) nach einem der vorstehenden Ansprüche, wobei die Befestigungsanordnung (3) mindestens zwei Löcher (6) zum Montieren des Vorderradgabelschutzes (1) an dem Motorrad oder Geländerad umfasst.

7. Vorderradgabelschutz (1) nach einem der vorstehenden Ansprüche, umfassend eine Bremsschlauchbefestigungsanordnung (7), die an dem länglichen Abschirmungsteil (2) angeordnet ist, wobei die Bremsschlauchbefestigungsanordnung (7) einen Schnellverschluss (7a) umfasst.

8. Vorderradgabelschutz (1) nach einem der vorstehenden Ansprüche, wobei das längliche Abschirmungsteil (2) eine derartige Länge aufweist, dass es ein Gabelrohr (8a) und den Schnittpunkt zwischen dem Gabelrohr und einer Gabelabdeckung (8b) des Vorderradgabeldämpfers (8) abdeckt, wenn es an einem Motorrad oder Geländerad montiert ist.

9. Vorderradgabelschutz (1) nach einem der vorstehenden Ansprüche, wobei das längliche Abschirmungsteil (2) und die Befestigungsanordnung (3) eine längliche Einheit in der geschlossenen Position ausbilden, die eine Längsachse (A1) definiert, wobei das längliche Abschirmungsteil (2) relativ zu der Befestigungsanordnung (3) derart schwenkbar ist, dass es in einem Winkel (α) zwischen 0° und 180° und vorzugsweise zwischen 0° und 90° relativ zu der Längsachse schwenkt.

## Revendications

1. Protection de fourche avant (1) destiné à protéger un amortisseur de fourche avant (8), la protection de fourche avant (1) comprenant :
- une partie allongée (2) formant bouclier,
- un agencement de fixation (3) pour fixer la protection de fourche avant (1) à une motocyclette ou un vélo tout-terrain,
- un élément de liaison (4), dans lequel la partie allongée (2) formant bouclier et l'agencement de fixation (3) sont reliés l'un à l'autre avec l'élément de liaison (4),
**caractérisé en ce que** la partie allongée (2) formant bouclier et l'agencement de fixation (3) peuvent pivoter l'un par rapport à l'autre entre une position fermée dans laquelle ils viennent en butée et une position ouverte, et
- un mécanisme de verrouillage (5) agencé pour maintenir la partie allongée (2) formant bouclier et l'agencement de fixation (3) en position fermée lorsqu'ils sont mis en prise.

2. Protection de fourche avant (1) selon la revendication 1, dans laquelle l'élément de liaison (4) comprend au moins une charnière.

3. Protection de fourche avant (1) selon la revendication 1 ou 2, dans laquelle l'agencement de fixation (3) comprend une arête d'agencement de fixation (3a) agencée pour se chevaucher avec la partie allongée (2) formant bouclier dans la position fermée.

4. Protection de fourche avant (1) selon l'une quelconque des revendications précédentes, dans laquelle la partie de protection allongée (2) comprend une arête de partie de protection allongée (2a) formant bouclier agencée pour se chevaucher avec l'agencement de fixation (3) dans la position fermée.

5. Protection de fourche avant (1) selon l'une quelconque des revendications précédentes, dans laquelle le mécanisme de verrouillage (5) comprend l'un quelconque parmi une clavette, une pince, une goupille, une arête, un verrou et une vis.

6. Protection de fourche avant (1) selon l'une quelconque des revendications précédentes, dans laquelle l'agencement de fixation (3) comprend au moins deux trous (6) pour monter la protection de fourche avant (1) sur la motocyclette ou le vélo tout-terrain.

7. Protection de fourche avant (1) selon l'une quelconque des revendications précédentes, comprenant un agencement de fixation de tuyau de frein (7) agencé sur la partie allongée (2) formant bouclier, dans laquelle l'agencement de fixation de tuyau de frein (7) comprend un élément de fixation à libération rapide (7a).

8. Protection de fourche avant (1) selon l'une quelconque des revendications précédentes, dans laquelle la partie allongée (2) formant bouclier a une longueur telle qu'elle recouvre un tube de fourche (8a) et l'intersection entre le tube de fourche et un couvercle de fourche (8b) de l'amortisseur de fourche avant (8) lorsqu'il est monté sur une motocyclette ou vélo tout-terrain.

9. Protection de fourche avant (1) selon l'une quelconque des revendications précédentes, dans laquelle la partie allongée (2) formant bouclier et l'agencement de fixation (3) forment une unité allongée dans la position fermée qui définit un axe longitudinal (A1), la partie allongée (2) formant bouclier pouvant pivoter par rapport à l'agencement de fixation (3) de telle sorte qu'elle pivote selon un angle (α) compris entre 0° et 180° et de préférence entre 0° et 90° par rapport à l'axe longitudinal.
